# EUROPÄISCHE PATENTANMELDUNG

(11) **EP 0 688 696 A2**
(43) Veröffentlichungstag der Anmeldung: **27.12.1995**
(21) Anmeldenummer: 95109438.2
(22) Anmeldetag: 19.06.1995
(51) Int. Cl.: B60Q 7/00

(54) **Zusammenklappbares Warndreieck**

(30) Priorität: 23.06.1994 DE 9410145 U
(71) Anmelder: Knezevic, Predrag, D-89075 Ulm (DE)
(72) Erfinder: Knezevic, Predrag, D-89075 Ulm (DE)
(74) Vertreter: Lorenz, Werner, Dipl.-Ing.

(57) **Zusammenfassung**

Ein zusammenklappbares Warndreieck (1), insbesondere für die Mitnahme in Kraftfahrzeugen, ist mit dreieckförmigen Reflektoren (3) versehen. Auf den Reflektoren (3) sind Leuchtdioden (4) vorgesehen, die von einer Steuerungseinrichtung ansteuerbar sind. Des weiteren ist eine Energieversorgung für die Steuerungseinrichtung und die Leuchtdioden (4) vorgesehen.

## Beschreibung

Die Erfindung betrifft ein zusammenklappbares Warndreieck, insbesondere für die Mitnahme in Kraftfahrzeugen, mit dreieckförmig angeordneten Reflektoren.

Aus der Praxis sind zusammenklappbare Warndreiecke für die Mitnahme in Kraftfahrzeugen bekannt.

Derartige Warndreiecke weisen meistens dreieckförmig angeordnete Reflektoren sowie einen Standfuß zum Aufstellen des Warndreiecks auf einer ebenen Fläche, beispielsweise der Fahrbahnebene, auf.

Nachteilig an diesen bekannten Warndreiecken ist jedoch, daß diese trotz der Reflektoren relativ schlecht gesehen werden können, so daß oftmals Unfälle verursacht werden, weil ein Kraftfahrer eine Unfallstelle, die mittels eines derartigen Warndreieckes abgesichert wurde, nicht oder erst zu spät erkannt hat und nicht mehr rechtzeitig abbremsen konnte.

Die Sichtbarkeit derartiger bekannter Warndreiecke ist insbesondere bei Regen sehr schlecht. Jedoch auch in der Nacht ist das Warndreieck prinzipbedingt erst dann erkennbar, wenn der Scheinwerfer eines Fahrzeuges oder eine andere Lichtquelle auf die Reflektoren trifft.

Die Sichtbarkeit des Warndreieckes ist also, insbesondere in kritischen Wettersituationen, wie beispielsweise Nebel, dichter Regen usw., bei denen es gerade auf eine gute Sichtbarkeit des Warndreieckes ankommt, relativ schlecht.

Zur Absicherung von Baustellen auf stark befahrenen Straßen sind Blitzanlagen bekannt, wobei die Einzelblitze der Blitzanlage in vorbestimmten Positionen aufgestellt sind und sequentiell angesteuert werden, so daß der Verkehr an der Baustelle vorbeigeleitet wird. Derartige Anlagen eignen sich jedoch nicht zur Mitnahme in Kraftfahrzeugen.

Der vorliegenden Erfindung liegt daher die Aufgabe zugrunde, ein zusammenklappbares Warndreieck vorzusehen, das die genannten Nachteile des Standes der Technik nicht aufweist, insbesondere das bei kritischen Wetterbedingungen gut sichtbar ist.

Erfindungsgemäß wird diese Aufgabe dadurch gelöst, daß auf den Reflektoren Leuchtdioden vorgesehen sind, die von einer Steuerungseinrichtung ansteuerbar sind, wobei eine Energieversorgung für die Steuerungseinrichtung und die Leuchtdioden vorgesehen ist.

Durch das Vorsehen von Leuchtdioden auf den Reflektoren wird das erfindungsgemäße zusammenklappbare Warndreieck nicht erst dann von einem Verkehrsteilnehmer bemerkt, wenn der Lichtstrahl beispielsweise des eigenen Scheinwerfers oder einer anderen Lichtquelle auf die Reflektoren des Warndreieckes fällt, vielmehr wird das erfindungsgemäße Warndreieck aufgrund der Leuchtdioden, die so angesteuert werden können, daß sie in auffälliger Weise blinken, von jedem Verkehrsteilnehmer registriert, selbst wenn dieser mit einem Fahrzeug unterwegs ist, welches nur einen Scheinwerfer mit relativ geringer Leuchtkraft aufweist, wie dies beispielsweise bei motorisierten Zweirädern wie Mofas, Fahrrädern mit Hilfsmotor usw., der Fall ist.

Die Energieversorgung für die Steuerungseinrichtung zum Ansteuern der Leuchtdioden sowie die Energieversorgung für die Leuchtdioden selbst ist vorteilhafterweise direkt auf bzw. an dem Warndreieck untergebracht, so daß das erfindungsgemäße Warndreieck sehr schnell in Betriebsbereitschaft gebracht werden kann und kein lästiges Verlegen von Kabeln, beispielsweise vom Warndreieck zu einer 12 Volt-Steckdose innerhalb eines Kraftfahrzeuges, notwendig ist.

Selbstverständlich könnte jedoch auch eine Energieversorgung auf diese Art und Weise vorgesehen werden.

Um ein leichtes und problemloses Zusammenklappen des Warndreiecks zu gewährleisten, können die Leuchtdioden auf wenigstens einer Seite der Reflektoren wenigstens bündig mit diesen abschließen.

Hierdurch wird vermieden, daß beim Zusammenklappen bzw. beim Aufstellen des erfindungsgemäßen Warndreiecks die Köpfe der Leuchtdioden abgeschert oder anderweitig beschädigt werden. Selbstverständlich können die Leuchtdioden auch versenkt in den Reflektoren angebracht werden, soweit dies den Abstrahlwinkel der Leuchtdioden nicht nachteilig beeinflußt.

In vorteilhafter Weise kann die Energieversorgung des erfindungsgemäßen Warndreiecks über Batterien und/oder Akkumulatoren erfolgen.

Durch die Verwendung von Akkumulatoren kann das erfindungsgemäße Warndreieck umweltfreundlich betrieben werden, da die Akkumulatoren nach deren Entladung einfach aus dem Warndreieck entnommen werden und mit einem geeigneten Ladegerät wieder aufgeladen werden können, so daß keinerlei Müll entsteht.

Der Akkumulator kann auch fest in dem Warndreieck eingebaut sein.

Da Batterien jedoch eine längere Lebensdauer bzw. Leistungsabgabe aufweisen als wiederaufladbare Akkumulatoren, können auch diese vorteilhaft zur Energieversorgung des erfindungsgemäßen zusammenklappbaren Warndreiecks verwendet werden.

Die Leuchtdioden, welche, wie bereits beschrieben, auf den Reflektoren des zusammenklappbaren Warndreiecks angeordnet sind, können gleichzeitig und/oder in einer bestimmten Reihenfolge von der Steuerungseinrichtung angesteuert werden.

Hierdurch können beliebige Blinkvariationen auf einfache Art und Weise eingestellt werden, so daß Verkehrsteilnehmer sehr schnell auf ein erfindungsgemäßes aufgestelltes Warndreieck aufmerksam werden, wodurch, wie bereits eingangs erwähnt, Unfälle an abgesicherten Unfallstellen vermieden werden können.

Des weiteren kann auch ein Helligkeitssensor vorgesehen sein, welcher die Steuerungseinrichtung beim Unterschreiten einer voreinstellbaren Lichtstärke aktiviert.

Somit kann vermieden werden, daß ein Benutzer des erfindungsgemäßen Warndreiecks das Einschalten der Steuerungseinrichtung und somit das Aktivieren der Leuchtdioden vergißt. Dies ist insbesondere dann von Vorteil, wenn eine Unfallstelle kurz vor Einbruch der Dämmerung abgesichert werden muß und das Warndreieck über einen längeren Zeitraum an der Unfallstelle stehen soll. Der Helligkeitssensor schaltet dann automatisch bei Einbruch der Dunkelheit die Steuerungseinrichtung bzw. die Leuchtdioden ein.

In einer vorteilhaften Ausführungsform des erfindungsgemäßen zusammenklappbaren Warndreieckes kann hinter oder unter den Reflektoren ein Gehäuse vorgesehen sein, welches die Energieversorgung und/oder die Steuerungseinrichtung und/oder den Helligkeitssensor aufnimmt.

Das Unterbringen sowohl der Energieversorgung als auch der Steuerungseinrichtung und des Helligkeitssensors bietet den Vorteil, daß nur ein Gehäuse vorgesehen werden muß, welches kostengünstig hergestellt werden kann. Des weiteren kann die gesamte Elektronik des erfindungsgemäßen Warndreiecks auf einer Platine untergebracht werden, so daß auch die Steuerungseinrichtung kostengünstig hergestellt werden kann.

Auf dieser Platine kann beispielsweise auch direkt der Helligkeitssensor angeordnet werden, so daß aufwendige lange Kabelstrecken an dem zusammenklappbaren Warndreieck vermieden werden.

In einer vorteilhaften Ausführungsform des erfindungsgemäßen Warndreickes können die Helligkeit und/oder die Blinkfrequenz der Leuchtdioden einstellbar sein.

Durch die Anpassung der Helligkeit beispielweise an die Umgebungsverhältnisse, kann der Energieverbrauch des erfindungsgemäßen Warndreiecks wesentlich verringert werden.

So kann, beispielsweise bei dichtem Nebel, das Warndreieck mit maximaler Helligkeit betrieben werden, während in einer klaren Nacht nur die halbe Leistung abgerufen werden muß, so daß sich die Lebensdauer der Energieversorgung bzw. der Batterien und/oder Akkumulatoren in der Energieversorgung, entsprechend erhöht. Gleiches gilt auch für die Blinkfrequenz der Leuchtdioden.

Sowohl die Helligkeit als auch die Blinkfrequenz der Leuchtdioden kann beispielsweise über den Helligkeitssensor gesteuert werden, oder der Benutzer des zusammenklappbaren Warndreieckes kann, z.B. über an dem Gehäuse angebrachte Potentiometer, diese Parameter selbst einstellen.

Eine weitere Möglichkeit zur Enregieversorgung des erfindungsgemäßen Warndreieckes ist das Vorsehen von Solarzellen, mittels derer die Akkumulatoren der Energieversorgung aufladbar sind.

Zum Aufladen der Akkumulatoren wird das erfindungsgemäße Warndreieck einfach für einen festgelegten Zeitraum in die Sonne gestellt, so daß die Akkumulatoren in dem Warndreieck hierdurch wieder aufgeladen werden und das Warndreieck somit wieder betriebsbereit ist. Die Solarzellen können an beliebigen geeigneten Stellen auf dem Warndreieck vorgesehen sein.

Beispielsweise können die Solarzellen hinter, neben oder über den Reflektoren oder auch auf dem Gehäuse des erfindungsgemäßen Warndreiecks angeordnet sein.

In vorteilhafter Weise kann in das Gehäuse, welches die Steuerungseinrichtung enthält, auch eine Arbeitsleuchte integriert sein.

Dies ist insbesondere dann von Vorteil, wenn aufgrund der in dem erfindungsgemäßen Warndreieck vorhandenen Leuchtdioden auf das Mitführen einer zusätzlichen gelben Blinkleuchte, wie sie aus der Praxis bekannt ist, verzichtet wird. Diese Blinkleuchten enthalten überwiegend auf ihrer Rückseite auch eine Arbeitsleuchte, mit der man ausreichend Licht beispielsweise zum Beheben kleinerer Pannen erzeugen kann. Diese Arbeitsleuchte kann nun vorteilhaft in das Gehäuse oder in eine andere Stelle des Warndreiecks integriert werden.

Nachfolgend ist anhand der Zeichnung ein Ausführungsbeispiel des erfindungsgemäßen Warndreiecks prinzipmäßig beschrieben.

Es zeigt:
- Fig. 1: eine Ansicht des erfindungsgemäßen Warndreiecks von vorne,
- Fig. 2: eine Ansicht des erfindungsgemäßen Warndreiecks von hinten,
- Fig. 3: eine Ansicht des erfindungsgemäßen Warndreiecks von oben, und
- Fig. 4: einen Schnitt durch einen Schenkel des erfindungsgemäßen Warndreiecks.

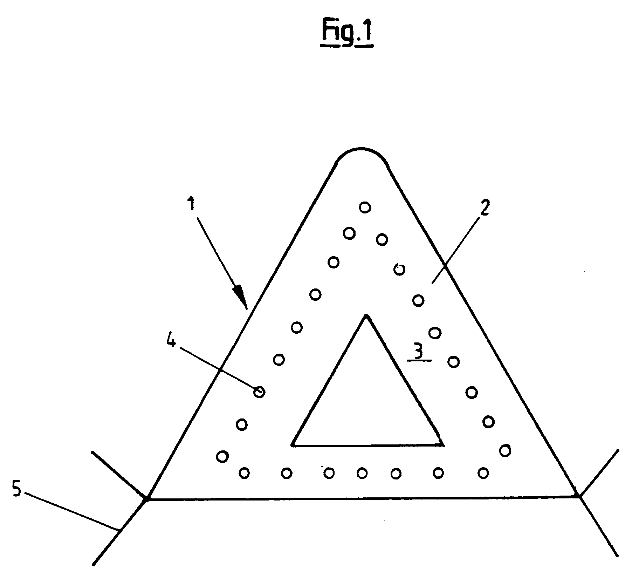

Fig. 1 zeigt eine Ansicht des erfindunggemäßen Warndreiecks 1 von vorne.

Das Warndreieck weist drei Schenkel 2 auf, welche an ihrer Vorderseite mit Reflektoren 3 versehen sind.

Auf den einzelnen Schenkein 2 sind Leuchtdioden 4 angebracht.

In dem vorliegenden Ausführungsbeispiel sind ca. 10 Leuchtdioden für jeden Schenkel 2 des Warndreiecks 1 vorgesehen.

Die Leuchtdioden sind dabei so auf bzw. in den Reflektoren 3 angeordnet, daß die Reflektorwirkung der Reflektoren 3 aufgrund der durch die Leuchtdioden 4 verringerten Reflektorfläche einerseits nicht zu gering ist und andererseits das Abstrahlverhalten der Leuchtdioden 4 noch ausreichend gut ist.

Das Warndreieck 1 ist mit Standbeinen 5 vorgesehen, mittels derer das Warndreieck auf der Fahrbahnebene plaziert werden kann.

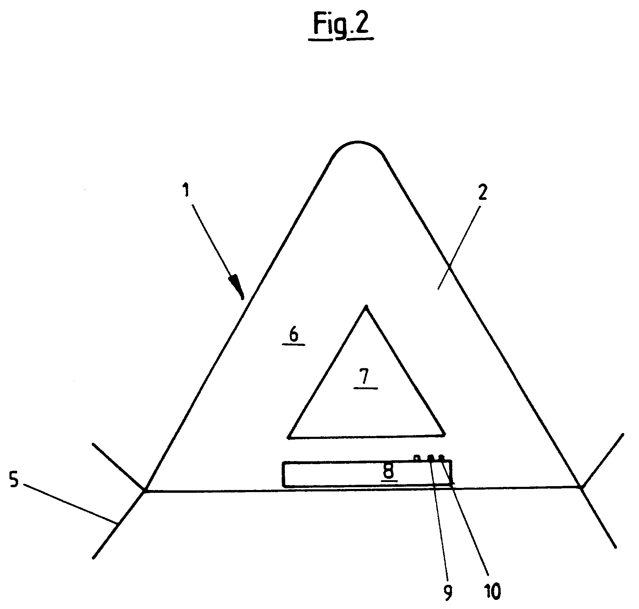

Fig. 2 zeigt eine Rückansicht des Warndreiecks 1.

Die in Zusammenhang mit der Beschreibung der Fig. 1 erwähnten Leuchtdioden 4 sind in dieser Ansicht nicht zu sehen, da die Anschlußkabel für die Leuchtdioden 4 unter der Rückwand 6 des Warndreiecks 1 verlaufen.

Die Rückwand 6 ist als Rückseite aller Schenkel 2 des Warndreiecks 1 vorgesehen und verhindert, daß Staub oder Feuchtigkeit in die Anschlußleitungen für die Leuchtdioden 4 oder die Leuchtdioden 4 selbst eindringen kann.

Die von den Schenkeln 2 eingeschlossene Fläche 7 des Warndreiecks 1 weist keinerlei Bespannung oder dergleichen auf, damit das Warndreieck 1 keinen großen Luftwiderstand bietet und auch bei stärkerem Wind noch standsicher steht.

An der Unterseite des Warndreiecks 1 ist ein Gehäuse 8 angeordnet, welches die Energieversorgung (nicht dargestellt) für das Warndreieck 1 sowie die Steuerungselektronik (ebenfalls nicht dargestellt) enthält.

Des weiteren sind auf dem Gehäuse 8 ein Ein-/Ausschalter 9 sowie ein Helligkeitsensor 10 angeordnet.

Der Helligkeitssensor 10 ist mit der Steuerungselektronik des Warndreiecks 1 verbunden und aktiviert diese beispielsweise bei Einbruch der Dunkelheit.

Der Helligkeitssensor 10 wiederum ist vom Benutzer des Warndreiecks 1 durch den Ein-/Ausschalter 9 aktivierbar. Außerdem kann auch vorgesehen sein, daß vom Anwender die Empfindlichkeit des Sensors eingestellt werden kann.

Auf dem Gehäuse können selbstverständlich auch noch weitere Schalter und/oder Regler angebracht werden, wie beispielsweise zum Einstellen der Blinkfrequenz der Leuchtdioden 4 oder zum Einstellen der Helligkeit der Leuchtdioden 4. Aus Übersichtlichkeitsgründen wurde auf die Darstellung dieser Schalter und/oder Regler verzichtet.

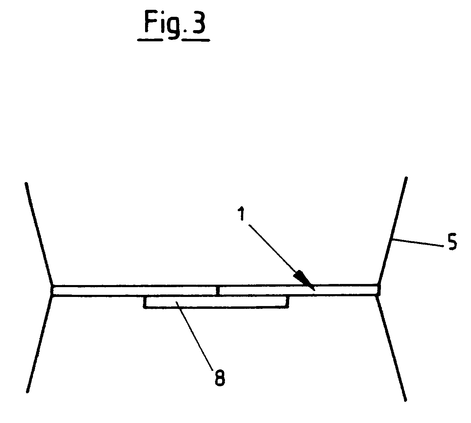

In Fig. 3 ist eine Draufsicht auf das Warndreieck 1 dargestellt. In dieser Ansicht sind insbesondere die Standbeine 5 des Warndreiecks, sowie das Gehäuse 8 gut erkennbar.

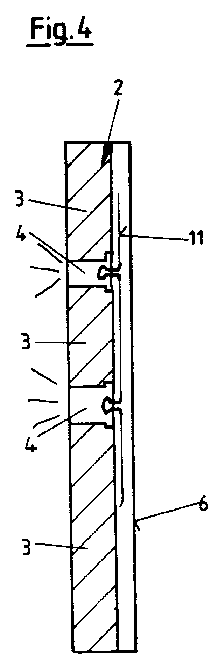

Fig. 4 zeigt einen Teil eines Schnitts durch einen Schenkel 2 eines Warndreiecks 1.

Zwischen den einzelnen Reflektoren 3 sind Aussparungen für die Leuchtdioden 4 vorgesehen. Die Verbindung zwischen den einzelnen Leuchtdioden 4 erfolgt durch Leitungen 11, wobei die Leuchtdioden 4 in Reihe oder parallel geschaltet sein können.

Ein Eindringen von Staub oder Schmutz in die Leuchtdioden 4 wird durch eine Rückwand 6 verhindert, welche auf die Reflektoren 2 bzw. auf deren Rückseite aufgesetzt ist. Alternativ können die Leitungen 11 selbstverständlich auch einfach und in offener Weise auf der Rückseite der Reflektoren 3 verlegt werden, wo sie dann jedoch anfälliger für Beschädigungen sind.

Die Leuchtdioden 4 sind hierbei wenigstens bündig mit der Vorderfläche der Reflektoren 3 vorgesehen, um beim Zusammenklappen des Warndreiecks in seine Transportstellung ein Beschädigen der Leuchtdioden 4 zu vermeiden. Selbstverständlich können die Leuchtdioden 4 auch tiefer gesetzt werden, d.h. die oberste Kante der Leuchtdioden 4 liegt unterhalb der vorderen Oberfläche der Reflektoren 3.

Sind an einem beschriebenen Warndreieck ca. 10 Leuchtdioden pro Schenkel 2, d.h. insgesamt ca. 30 Leuchtdioden 4 vorgesehen, so kann das Warndreieck bei einer Stromversorgung durch sechs 1,5-Volt-Batterien ca. 18 Stunden lang in Betrieb gehalten werden. Bei klarer Sicht wird das Warndreieck von Verkehrsteilnehmern bereits aus Entfernungen von über 2 km wahrgenommen, so daß eine Unfallstelle so abgesichert werden kann, daß Auffahrunfälle und dergleichen in Folge eines Nichterkennens der Unfallstelle nahezu unmöglich sind.

## Patentansprüche

1. Zusammenklappbares Warndreieck insbesondere für die Mitnahme in Kraftfahrzeugen, mit dreieckförmig angeordneten Reflektoren,
**dadurch gekennzeichnet,** daß auf den Reflektoren (3) Leuchtdioden (4) vorgesehen sind, die von einer Steuerungseinrichtung ansteuerbar sind, wobei eine Energieversorgung für die Steuerungseinrichtung und die Leuchtdioden (4) vorgesehen ist.

2. Warndreieck nach Anspruch 1,
**dadurch gekennzeichnet,** daß die Leuchtdioden (4) auf wenigstens einer Seite der Reflektoren (3) wenigstens bündig mit diesen abschließen.

3. Warndreieck nach Anspruch 1 oder 2,
**dadurch gekennzeichnet,** daß die Energieversorgung über Batterien und/oder Akkumulatoren erfolgt.

4. Warndreieck nach einem der Ansprüche 1 bis 3,
**dadurch gekennzeichnet,** daß die Leuchtdioden (4) gleichzeitig und/oder in einer bestimmten Reihenfolge ansteuerbar sind.

5. Warndreieck nach einem der Ansprüche 1 bis 4,
**dadurch gekennzeichnet,** daß ein Helligkeitssensor (10) vorgesehen ist, welcher die Steuerungseinrichtung beim Unterschreiten einer voreinstellbaren Lichtstärke aktiviert.

6. Warndreieck nach einem der Ansprüche 1 bis 5,
**dadurch gekennzeichnet,** daß hinter oder unter den Reflektoren (3) ein Gehäuse (8) vorgesehen ist, welches die Energieversorgung und/oder die Steuerungseinrichtung und/oder den Helligkeitssensor (10) aufnimmt.

7. Warndreieck nach einem der Ansprüche 1 bis 6,
**dadurch gekennzeichnet,** daß die Helligkeit und/oder die Blinkfrequenz der Leuchtdioden (4) einstellbar sind.

8. Warndreieck nach einem der Ansprüche 1 bis 7,
**dadurch gekennzeichnet,** daß Solarzellen vorgesehen sind, mittels derer die Akkumulatoren der Energieversorgung aufladbar sind.

9. Warndreieck nach Anspruch 8,
**dadurch gekennzeichnet,** daß die Solarzellen hinter, neben oder über den Reflektoren (3) angeordnet sind.

10. Warndreieck nach Anspruch 8,
**dadurch gekennzeichnet,** daß die Solarzellen auf dem Gehäuse (8) vorgesehen sind.

11. Warndreieck nach einem der Ansprüche 1 bis 10,
**dadurch gekennzeichnet,** daß in das Gehäuse (8) eine Arbeitsleuchte integriert ist.
